# EUROPÄISCHE PATENTSCHRIFT

(11) **EP 1 108 941 B1**
(45) Veröffentlichungstag und Bekanntmachung des Hinweises auf die Patenterteilung: **05.11.2003**
(21) Anmeldenummer: 00126566.9
(22) Anmeldetag: 12.12.2000
(51) Int. Cl.: F16L 27/107, F16L 27/108, F16L 27/11, F16L 51/02, F16L 37/084

(54) **Leitungsverbinder insbesondere für Kraftstoffleitungen**
Pipe connector especially for fuel lines
Raccord de tuyaux particulièrement pour conduites de carburant

(30) Priorität: 17.12.1999 DE 29922230 U
(43) Veröffentlichungstag der Anmeldung: 20.06.2001
(73) Patentinhaber: Voss Automotive GmbH, 51688 Wipperfürth (DE)
(72) Erfinder: Berg, Manfred, Dipl.-Ing., 51688 Wipperfürth (DE)
(74) Vertreter: Patentanwälte Dr. Solf & Zapf

(56) Entgegenhaltungen:
- FR-A- 1 519 744
- FR-A- 2 257 841
- GB-A- 2 120 341
- US-A- 4 810 008

## Beschreibung

Die vorliegende Erfindung betrifft einen Leitungsverbinder für Rohr- und/oder Schlauchleitungen, insbesondere Kraftstoffleitungen, bestehend aus einem Verbindungskörper mit mindestens einem Leitungsanschlußelement, wobei das (bzw. jedes) Leitungsanschlußelement über einen derart elastisch und/oder plastisch verformbaren Übergangsabschnitt mit dem Verbindungskörper verbunden ist, daß es relativ zu dem Verbindungskörper unter Aufrechterhaltung der Mediendichtheit quer zu einer Aufsteckachse der Leitung abbiegbar bzw. abknickbar ist.

Bekannte Leitungsverbinder der genannten Art bestehen heute überwiegend aus Kunststoff. Das Leitungsanschlußelement ist in der Regel als Dornprofil (Einschlagdorn) zum kraft- und/oder formschlüssigen Aufstecken einer Leitung ausgebildet. Dabei kann der Verbindungskörper als Kupplungsgehäuse eines Stecker- oder Muffenteils einer Steckkupplung ausgebildet sein. Solche Leitungsverbinder werden beispielsweise in Kraftfahrzeugen im Bereich der Kraftstoffleitungen eingesetzt. Dabei sind unfallbedingte (crashbedingte) Verformungen des Fahrzeuges problematisch, da es dabei zu Kollisionen des Leitungsverbinders mit Motor-und/oder Karosserieteilen kommen kann. In schweren Fällen kann daraus ein Brechen des Verbinders resultieren, und die in der Folge auftretende Undichtigkeit führt zu einer Leckage des Kraftstoffs, der bei Kontakt mit heißen Motorteilen entzündet werden und somit einen Fahrzeugbrand verursachen könnte.

Die FR-A-2 257 841 beschreibt zum Verbinden von zwei Rohren eine Kunststoffmanschette, die beidseitig durch je eine Überwurf-Schraubmutter auf das jeweilige Rohr gepreßt wird. Diese Manschette fungiert lediglich als eine Art Dehnungsfuge.

Eine sehr ähnliche Anordnung beschreibt auch die FR-A-1 519 744, wobei zwei Rohre über eine Gummimanschette verbunden werden.

Die US-A-4 810 008 beschreibt einen Verbinder (Fitting) für Rohre in Sprinkler-Anlagen, der einen einfachen Austausch von undichten Teilen, z. B. Rohrabschnitten, ermöglichen soll. Dazu besitzt der Verbinder Rohranschlüsse, die über faltenbalgartige Zwischenabschnitte derart längsbeweglich sind, dass sie axial auf die Leitung aufgeschoben und verklebt werden können.

Die GB-A-2 120 341 offenbart einen verformbaren Rohrverbinder mit einem von einem metallischen Wellrohr gebildeten, falten- bzw. wellenbalgartigen Abschnitt, der plastisch um einen beliebigen Winkel umbiegbar ist.

Der vorliegenden Erfindung liegt die Aufgabe zugrunde, einen Leitungsverbinder der eingangs beschriebenen Art so zu verbessern, daß die Gefahr von Beschädigungen, insbesondere Brüchen, durch eine von außen aufgebrachte, vor allem crashbedingte Kraft deutlich reduziert wird. Dabei soll der Verbinder dennoch einfach und kostengünstig herstellbar sein.

Erfindungsgemäß wird dies dadurch erreicht, daß das Leitungsanschlußelement mit dem Übergangsabschnitt und dem Verbindungskörper von einem einteiligen, monolithisch in einem Kunststoff-Formvorgang in einem Mehrkomponenten-Spritzverfahren aus mindestens zwei verschiedenen Materialien hergestellten Formteil gebildet ist.

Durch diese vorteilhafte Ausgestaltung wird eine Bruchgefahr im Bereich des Leitungsverbinders deutlich reduziert, weil durch die Eigenschaften des Verbindungsabschnittes selbst bei einem Umknicken um bis zu mindestens 90 die Mediendichtheit aufrecht erhalten bleibt. Zwar führt ein derart starkes Umknicken zu einer plastischen, den Strömungsquerschnitt beeinträchtigenden Verformung, so dass der Verbinder auszutauschen wäre, jedoch werden selbst bei solchen gravierenden Verformungen Leckagen effektiv vermieden. Geringfügigere Verformungen sind sogar im elastischen Bereich möglich, so dass der Verbinder weiter verwendbar bleibt. Um die erfindungsgemäß bruchfreie Verformbarkeit zu erreichen, wird der Verbindungsabschnitt bezüglich seiner materialspezifischen und/oder formbedingten Eigenschaften insbesondere empirisch so ausgelegt, dass eine vorgegebene Verformung ohne Leckage möglich ist. Dazu hat es sich als besonders vorteilhaft herausgestellt, für den Verbindungsabschnitt ein Thermoplast ohne Faserverstärkung, insbesondere PA 12, einzusetzen, während die übrigen Abschnitte aus einem, insbesondere dem gleichen, Thermoplast, allerdings mit Faserverstärkung, insbesondere Glasfaseranteil, bestehen, vorzugsweise aus PA 12 - 23% GF. Bei diesen Materialien handelt es sich zudem bevorzugt um elektrisch leitfähige Rezepturen, um im Hinblick auf die bevorzugte Verwendung im Kraftstoffbereich statische Aufladungen und daraus womöglich resultierende Funkenbildungen zu vermeiden. Erfindungsgemäß ist durch die Ausbildung als einstückiges, monolithisch gespritztes Formteil die Herstellung dennoch einfach und kostengünstig.

Vorteilhafte Ausgestaltungsmerkmale der Erfindung sind in den Unteransprüchen enthalten.

Anhand von bevorzugten, in der Zeichnung veranschaulichten Ausführungsbeispielen soll die Erfindung genauer erläutert werden. Dabei zeigen:
- Fig. 1: einen Längsschnitt durch eine erste Ausführungsform eines erfindungsgemäßen Leitungsverbinders,
- Fig. 2: eine Ansicht analog zu Fig. 1 einer zweiten Ausführungsform des Leitungsverbinders,
- Fig. 3: eine Perspektivansicht einer dritten, bevorzugten Ausführung des Leitungsverbinders und
- Fig. 4: einen gegenüber Fig. 3 vergrößerten Längsschnitt durch diese Ausführung.

Ein erfindungsgemäßer Leitungsverbinder 1 dient zum Anschluß mindestens einer (nicht dargestellten) Rohr- oder Schlauchleitung, insbesondere einer Kraftstoffleitung. Dazu besteht der Leitungsverbinder 1 aus einem Verbindungskörper 2 mit mindestens einem Leitungsanschlußelement 4.

Das Leitungsanschlußelement 4 ist bevorzugt als übliches Dornprofil (Einschlagdorn) zum Aufstecken einer Leitung ausgebildet. Wie an sich üblich weist das Dornprofil mehrere, über seine Länge verteilt angeordnete, in Umfangsrichtung ringartig durchgehend verlaufende Halterippen 6 mit einer widerhakenartigen Kontur auf. Dadurch wird eine zumindest kraftschlüssige, insbesondere aber kraftformschüssige Halterung der aufgesteckten Leitung erreicht. Zur Aufsteckbegrenzung der Leitung, insbesondere aber auch als Widerlagerelement zum Festhalten des Leitungsanschlußelementes 4 beim Aufstecken bzw. Aufpressen der Leitung, kann das Leitungsanschlußelement 4 auf seiner dem Verbindungskörper 2 zugekehrten Seite einen sich radial erstreckenden Ringsteg 8 aufweisen.

Der Verbindungskörper 2 ist vorzugsweise als Kupplungsgehäuse einer Steckkupplung ausgebildet. Im dargestellten Ausführungsbeispiel bildet das Kupplungsgehäuse ein Muffenteil mit einer Aufnahmeöffnung zum Einstecken eines nur gestrichelt angedeuteten Steckerteils 10.

In den dargestellten Beispielen sind einerseits das Leitungsanschlußelement 4 bezüglich einer Aufsteckachse 12 der Leitung und andererseits der Verbindungskörper 2 bezüglich einer Steckachse 14 der Steckkupplung koaxial, d.h. in axialer Richtung fluchtend, hintereinanderliegend angeordnet. Es ist aber durchaus auch eine andere, praktisch beliebige Winkelanordnung zwischen dem Verbindungskörper 2 und dem Leitungsanschlußelement 4 möglich.

Erfindungsgemäß ist das Leitungsanschlußelement 4 relativ zu dem Verbindungskörper 2 unter bereichsweiser elastischer und/oder plastischer Verformung beweglich, und zwar quer zur Aufsteckachse 12 gesehen abbiegbar bzw. sogar abknickbar, ohne dass dadurch die Leitungsverbindung undicht werden würde. Dazu ist das Leitungsanschlußelement 4 vorzugsweise über einen in sich verformbaren Übergangsabschnitt 16 mit dem Verbindungskörper 2 verbunden. In bevorzugter Ausgestaltung ist das Leitungsanschlußelement 4 mit dem Übergangsabschnitt 16 und dem Verbindungskörper 2 von einem einteiligen, monolithisch in einem Formvorgang aus Kunststoff hergestellten Formteil 18 gebildet. Dabei kann der Übergangsabschnitt 16 durch materialspezifische und/oder formungsbedingte Eigenschaften seine erfindungsgemäße Verformbarkeit erhalten, wodurch ein Abknicken um bis zu mindestens 90) unter Aufrechterhaltung der Mediendichtheit möglich ist.

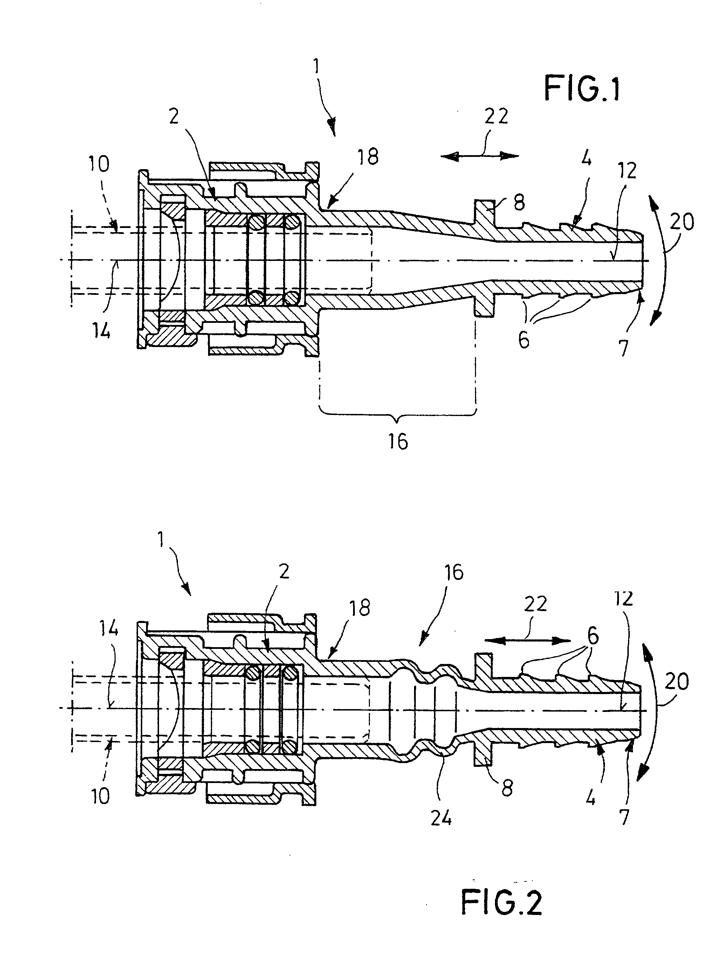

In den Ausführungen nach Fig. 1 sowie Fig. 3 und 4 sind es überwiegend materialspezifische Eigenschaften, die für die Verformbarkeit des Übergangsabschnittes 16 verantwortlich sind. Bei der Ausführung nach Fig. 2 weist der Übergangsabschnitt 16 eine spezielle Formung auf, die hauptsächlich die Verformbarkeit bewirkt, wobei zusätzlich aber auch die materialspezifischen Eigenschaften von Bedeutung sind.

Erfindungsgemäß wird das Formteil 18 in allen Ausführungen in einem Mehrkomponenten-Spritzverfahren aus mindestens zwei verschiedenen Kunststoff-Materialien hergestellt. Der Übergangsabschnitt 16 besteht aus einem elastischeren Material, während das Leitungsanschlußelement 4 und der Verbindungskörper 2 jeweils aus einem weniger elastischen, formstabileren Material bestehen. Grundsätzlich können dabei der Verbindungskörper 2 und das Leitungsanschlußelement 4 auch aus unterschiedlichen Materialien bestehen.

In einer bevorzugten Ausführung bestehen einerseits der Übergangsabschnitt 16 aus einem Thermoplast ohne Faserverstärkung und andererseits das Leitungsanschlußelement 4 und/oder der Verbindungskörper 2 aus einem Thermoplast mit Faserverstärkung. Für eine homogene, monolithische Verbindung der Abschnitte ist es vorteilhaft, wenn es sich grundsätzlich um den gleichen Thermoplast als Basismaterial handelt (insbesondere PA 12), wobei für den Verbindungskörper 2 und/oder das Leitungsanschlußelement 4 insbesondere ein Glasfaseranteil zugefügt wird (vorzugsweise etwa 23% GF).

Der Übergangsabschnitt 16 kann auch aus einem Elastomer bestehen, und für den Verbindungskörper 2 und/oder das Leitungsanschlußelement 4 kann ein geeignetes Plastomer-Material eingesetzt werden, z. B. ein Duroplast oder Thermoplast.

Aufgrund der bei den Ausführungsbeispielen axial fluchtenden Ausrichtung von Verbindungskörper 2 und Leitungsanschlußelement 4 liegt folglich auch der Übergangsabschnitt 16 dazu koaxial fluchtend dazwischen. Das Leitungsanschlußelement 4 ist aufgrund der Verformbarkeit des Übergangsabschnittes 16 relativ zu dem Verbindungskörper 2 in Querrichtung verkippbar (Doppelpfeil 20), gegebenenfalls aber auch zusätzlich in Axialrichtung durch Stauchen oder Längen des Übergangsabschnittes 16 bewegbar (Doppelpfeil 22 in Fig. 1 und 2). Durch die Verkippbarkeit in Doppelpfeilrichtung 20 verändert sich folglich der Winkel zwischen den Achsen 12 und 14.

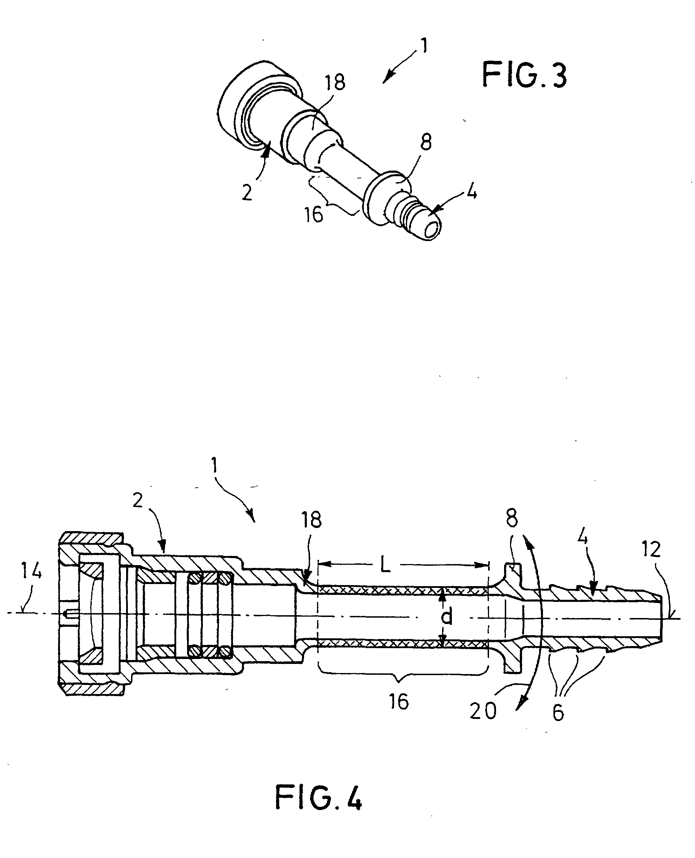

Bei der Ausführung nach Fig. 1 erweitert sich der Übergangsabschnitt 16 ausgehend von dem Leitungsanschlußelement 4 im Wesentlichen etwa hohlkonisch in Richtung des Verbindungskörpers 2. Bei der Ausführung nach Fig. 2 ist dabei der Übergangsabschnitt 16 bereichsweise falten- oder wellenbalgartig, insbesondere mit einer verdünnten, nach Art eines Wellrohrs ausgebildeten, falten- oder wellenförmigen Wandung 24 ausgeführt. In der Ausführung nach Fig. 3 und 4 ist der Übergangsabschnitt 16 durchgehend hohlzylindrisch mit insbesondere über seine Länge im Wesentlichen konstanter Wandstärke (konstante Innen- und Außendurchmesser) ausgebildet. Die genauen Abmessungen, insbesondere Innen- und Außendurchmesser, sind in Anpassung an die materialspezifischen Eigenschaften des jeweiligen Materials insbesondere empirisch sowie unter Berücksichtigung der Abmessungen (z. B. Nennweite) der am Leitungsanschlußelement 4 montierten (Rohr-) Leitung festzulegen. Dabei sollte das Verhältnis Länge L des Übergangsabschnittes 16 zu dessen Außendurchmesser d (vgl. Fig. 4) mindestens 2:1 betragen, um im Falle eines Abknickens die Mediendichtheit aufrecht zu erhalten. Bei dem bevorzugten Ausführungsbeispiel nach Fig. 3 und 4 liegt L:d etwa im Bereich von 2,5:1 bis 3,5:1, insbesondere bei etwa 2,7:1 bis 3:1.

Durch die erfindungsgemäße bruchfreie Verformbarkeit werden im praktischen Einsatz bei z.B. unfallbedingten Stoßbelastungen Brüche im Bereich des Leitungsverbinders 1 und daraus resultierende Kraftstoff-Leckagen vermieden, so daß vorteilhafterweise auch die Brandgefahr innerhalb eines Fahrzeugs wesentlich reduziert wird.

## Patentansprüche

1. Leitungsverbinder (1) für Rohr- und/oder Schlauchleitungen, insbesondere Kraftstoffleitungen, bestehend aus einem Verbindungskörper (2) mit mindestens einem Leitungsanschlußelement (4), wobei
das bzw. jedes Leitungsanschlußelement (4) über einen derart elastisch und/oder plastisch verformbaren Übergangsabschnitt (16) mit dem Verbindungskörper (2) verbunden ist, daß es relativ zu dem Verbindungskörper (2) unter Aufrechterhaltung der Mediendichtheit quer zu einer Aufsteckachse (12) der Leitung abbiegbar bzw. abknickbar ist, **dadurch gekennzeichnet, dass** das Leitungsanschlußelement (4) mit dem Übergangsabschnitt (16) und dem Verbindungskörper (2) von einem einteiligen, monolithisch in einem Kunststoff-Formvorgang in einem Mehrkomponenten-Spritzverfahren aus mindestens zwei verschiedenen Materialien hergestellten Formteil (18) gebildet ist.

2. Leitungsverbinder nach Anspruch 1,
**dadurch gekennzeichnet, dass** das Formteil (18) einerseits im Bereich des Übergangsabschnittes (16) aus einem relativ elastischen Material und andererseits im Bereich des Leitungsanschlußelementes (4) und/oder des Verbindungskörpers (2) jeweils aus einem weniger elastischen Material besteht.

3. Leitungsverbinder nach Anspruch 2,
**dadurch gekennzeichnet, dass** einerseits der Übergangsabschnitt (16) aus einem Thermoplast ohne Faserverstärkung, insbesondere PA 12, und andererseits das Leitungsanschlußelement (4) und/oder der Verbindungskörper (2) aus einem Thermoplast mit Faserverstärkung, insbesondere PA 12 - ca. 23% GF, bestehen.

4. Leitungsverbinder nach Anspruch 2,
**dadurch gekennzeichnet, dass** einerseits der Übergangsabschnitt (16) aus einem Elastomer und andererseits das Leitungsanschlußelement (4) und/oder der Verbindungskörper (2) aus einem Plastomer bestehen.

5. Leitungsverbinder nach einem der Ansprüche 1 bis 4,
**dadurch gekennzeichnet, dass** der Übergangsabschnitt (16) durch seine materialspezifischen und gegebenenfalls zusätzlich durch formungsbedingte Eigenschaften verformbar ist.

6. Leitungsverbinder nach einem der Ansprüche 1 bis 5,
**dadurch gekennzeichnet, dass** das Leitungsanschlußelement (4) als Dornprofil zum kraft- und/oder formschlüssigen Aufstecken einer Leitung ausgebildet ist.

7. Leitungsverbinder nach einem der Ansprüche 1 bis 6,
**dadurch gekennzeichnet, dass** der Verbindungskörper (2) als Kupplungsgehäuse eines Stecker- oder Muffenteils einer Steckkupplung ausgebildet ist.

8. Leitungsverbinder nach Anspruch 7,
**dadurch gekennzeichnet, dass** das Leitungsanschlußelement (4) bezüglich der Aufsteckachse (12) der Leitung und der Verbindungskörper (2) bezüglich einer Steckachse (14) der Steckkupplung koaxial ausgerichtet sind.

9. Leitungsverbinder nach einem der Ansprüche 1 bis 8,
**dadurch gekennzeichnet, dass** das Leitungsanschlußelement (4) relativ zu dem Verbindungskörper (2) zusätzlich in Axialrichtung bewegbar ist.

10. Leitungsverbinder nach einem der Ansprüche 1 bis 9,
**dadurch gekennzeichnet, dass** der Übergangsabschnitt (16) sich ausgehend von dem Leitungsanschlußelement (4) in Richtung des Verbindungskörpers (2) im Wesentlichen etwa konisch erweitert.

11. Leitungsverbinder nach einem der Ansprüche 1 bis 10,
**dadurch gekennzeichnet, dass** der Übergangsabschnitt (16) zumindest bereichsweise falten- oder wellenbalgartig ausgebildet ist.

12. Leitungsverbinder nach einem der Ansprüche 1 bis 9,
**dadurch gekennzeichnet, dass** der Übergangsabschnitt (16) hohlzylindrisch ausgebildet ist.

13. Leitungsverbinder nach einem der Ansprüche 1 bis 12,
**dadurch gekennzeichnet, dass** das Leitungsanschlußelement (4) in seinem einem freien Einsteckende (7) gegenüberliegenden Bereich ein Widerlagerelement insbesondere in Form eines radialen Ringsteges (8) aufweist.

14. Leitungsverbinder nach einem der Ansprüche 1 bis 13,
**dadurch gekennzeichnet, dass** das Verhältnis der Länge (L) des Übergangsabschnittes (16) zu dessen Außendurchmesser (d) mindestens etwa 2:1 beträgt und insbesondere etwa im Bereich von 2,5:1 bis 3,5:1 liegt.

## Claims

1. Pipe fitting (1) for pipes and/or hoses, in particular fuel lines, consisting of a connecting piece (2) with at least one pipe connection element (4), whereby the or each pipe connection element (4) is connected with the connecting piece (2) by way of an elastically and/or plastically deformable transition section (16) in such a way that it can be bent or kinked transversely to a plug-in axis (12) of the line relative to the connecting piece (2) while retaining tightness in respect of the medium, **characterised in that** the pipe connection element (4) with the transition section (16) and the connecting piece (2) is formed from a one-piece, monolithic moulding (18) produced from at least two different materials in a plastic moulding process by a multicomponent injection-moulding method.

2. Pipe fitting according to Claim 1,
**characterized in that** the moulding (18) consists of relatively elastic material on the one hand in the area of the transition section (16) and on the other of a less elastic material in the area of the pipe connection element (4) and/or the connecting piece (2).

3. Pipe fitting according to Claim 2,
**characterized in that** on the one hand the transition section (16) consists of a thermoplastic without fibre reinforcement, in particular PA 12, and on the other the pipe connection element (4) and/or the connecting piece (2) of a thermoplastic with fibre reinforcement, in particular PA 12 with approx. 23% glass fibre.

4. Pipe fitting according to Claim 2,
**characterized in that** on the one hand the transition section (16) consists of an elastomer and on the other the pipe connection element (4) and/or the connecting piece (2) of a plastomer.

5. Pipe fitting according to one of Claims 1 to 4,
**characterized in that** the transition section (16) is deformable due to its material-specific propertied and possibly also those due to moulding.

6. Pipe fitting according to one of Claims 1 to 5,
**characterized in that** the pipe connection element (4) is shaped as a plug profile for positive and/or non-positive attachment of a pipe.

7. Pipe fitting according to one of Claims 1 to 6,
**characterized in that** the connecting piece (2) is shaped as coupling housing of a plug or socket part of a plug connection.

8. Pipe fitting according to Claim 7,
**characterized in that** the pipe connection element (4) is aligned coaxially in respect of the axis of attachment (12), and the connecting piece (2) in respect of the axis of attachment (14) of the plug connection.

9. Pipe fitting according to one of Claims 1 to 8,
**characterized in that** the pipe connection element (4) is also movable axially relative to the connecting piece (2).

10. Pipe fitting according to one of Claims 1 to 9,
**characterized in that** the transition section (16) can basically be widened roughly conically from the pipe connection element (4) towards the connecting piece (2).

11. Pipe fitting according to one of Claims 1 to 10,
**characterized in that** the transition section (16) is shaped with folds or corrugations at least in places.

12. Pipe fitting according to one of Claims 1 to 9,
**characterized in that** the transition section (16) is shaped as a hollow cylinder.

13. Pipe fitting according to one of Claims 1 to 12,
**characterized in that** the pipe connection element (4) has a buttress element in particular in the form of a radial fin (8) in its area opposite to a free plug-in end (7).

14. Pipe fitting according to one of Claims 1 to 13,
**characterized in that** the ratio of the length (L) of the transition section (16) to it outside diameter (d) is at least about 2:1 and in particular lies roughly within the range from 2.5:1 to 3.5:1.

## Revendications

1. Raccord de tuyaux (1) pour tuyauteries et/ou tuyaux, en particulier pour tuyaux de carburant, comprenant un corps de liaison (2) avec au moins un élément de raccordement de tuyaux (4), l'élément de raccordement de tuyaux (4) ou chacun desdits éléments de raccordement de tuyaux étant relié avec le corps de liaison (2) par l'intermédiaire d'un segment de transition (16) déformable élastiquement et/ou plastiquement de façon qu'il puisse être courbé ou plié relativement au corps de liaison (2) transversalement à un axe d'enfoncement (12) du tuyau tout en conservant l'étanchéité au fluide, **caractérisé en ce que** l'élément de raccordement de tuyaux (4) avec le segment de transition (16) et le corps de liaison (2) sont formés par une pièce moulée (18) d'un seul tenant, fabriquée de façon monolithique à partir d'au moins deux matériaux différents dans un processus de moulage de matière plastique dans un procédé d'injection à plusieurs composants.

2. Raccord de tuyaux selon la revendication 1, **caractérisé en ce que** la pièce moulée (18) est réalisée dans un matériau relativement élastique dans la zone du segment de transition (16) d'une part, et dans un matériau moins élastique dans la zone de l'élément de raccordement des tuyaux (4) et/ou du corps de liaison (2), d'autre part.

3. Raccord de tuyaux selon la revendication 2, **caractérisé en ce que** le segment de transition (16) est constitué d'une matière thermoplastique non renforcée par fibres, en particulier de polyamide 12, d'une part, et l'élément de raccordement de tuyaux (4) et/ou le corps de liaison (2) d'une matière thermoplastique renforcée par fibres, en particulier de polyamide 12 avec environ 23% de fibres de verre, d'autre part.

4. Raccord de tuyaux selon la revendication 2, **caractérisé en ce que** le segment de transition (16) est constitué d'un élastomère, d'une part, et l'élément de raccordement de tuyaux (4) et/ou le corps de liaison (2) d'un plastomère, d'autre part.

5. Raccord de tuyaux selon l'une des revendications 1 à 4, **caractérisé en ce que** le segment de transition (16) est déformable du fait de ses caractéristiques spécifiques à la matière et le cas échéant en supplément du fait des caractéristiques conditionnées par le formage.

6. Raccord de tuyaux selon l'une des revendications 1 à 5, **caractérisé en ce que** l'élément de raccordement de tuyaux (4) est formé comme un profil de mandrin destiné à l'emboîtement d'un tuyau de manière solidaire avec une liaison dynamique et/ou avec correspondance de forme.

7. Raccord de tuyaux selon l'une des revendications 1 à 6, **caractérisé en ce que** le corps de liaison (2) est formé comme un boîtier d'accouplement d'une partie à emboîter ou partie manchon d'un raccord à emboîtement.

8. Raccord de tuyaux selon la revendication 7, **caractérisé en ce que** l'élément de raccordement de tuyaux (4) est orienté de manière coaxiale par rapport à l'axe d'emboîtement (12) du tuyau et le corps de liaison (2) de manière coaxiale par rapport à un axe d'emboîtement (14) du raccord à emboîtement.

9. Raccord de tuyaux selon l'une des revendications 1 à 8, **caractérisé en ce que** l'élément de raccordement de tuyaux (4) est mobile en supplément dans la direction axiale relativement au corps de liaison (2).

10. Raccord de tuyaux selon l'une des revendications 1 à 9, **caractérisé en ce que** le segment de transition (16) s'élargit essentiellement de façon à peu près en forme de cône à partir de l'élément de raccordement de tuyaux (4) dans la direction du corps de liaison (2).

11. Raccord de tuyaux selon l'une des revendications 1 à 10, **caractérisé en ce que** le segment de transition (16) est formé au moins par zones en forme de soufflet à plis ou à ondulations.

12. Raccord de tuyaux selon l'une des revendications 1 à 9, **caractérisé en ce que** le segment de transition (16) est en forme de cylindre creux.

13. Raccord de tuyaux selon l'une des revendications 1 à 12, **caractérisé en ce que** l'élément de raccordement de tuyaux (4) présente, dans sa zone opposée à une extrémité d'emboîtement libre (7), un élément de butée, en particulier sous la forme d'une nervure annulaire radiale (8).

14. Raccord de tuyaux selon l'une des revendications 1 à 13, **caractérisé en ce que** le rapport entre la longueur (L) du segment de transition (16) et le diamètre extérieur (d) de celui-ci est au moins d'environ 2:1 et se situe en particulier dans la plage située entre 2,5:1 et 3,5:1.
